# EUROPÄISCHE PATENTANMELDUNG

(11) **EP 1 982 817 A2**
(43) Veröffentlichungstag der Anmeldung: **22.10.2008**
(21) Anmeldenummer: 08450058.6
(22) Anmeldetag: 18.04.2008
(51) Int. Cl.: B29C 44/14, B29C 44/34

(54) **Herstellung von Formteilen**

(30) Priorität: 18.04.2007 AT 2442007 U
(71) Anmelder: Pollmann International GmbH, 3822 Karlstein an der Thaya (AT); Wollsdorf Leder Schmidt & Co., GmbH, 8181 Unterfladnitz (AT)
(72) Erfinder: Pany, Michael, 3843 Dobersberg (AT); Kraus-Güntner, Georg, 8160 Weiz-Thannhausen (AT); Kraus-Güntner, Elisabeth, 8160 Weiz-Thannhausen (AT)
(74) Vertreter: Sonn & Partner Patentanwälte

(57) **Zusammenfassung**

Beschrieben wird ein Verfahren zur Herstellung von Formteilen (1) mit von oberflächenstrukturiertem Dekormaterial (4), insbesondere Echt- oder Kunstleder, bedeckter Oberfläche durch Hinterspritzen mittels physikalischem Schäumen des Dekormaterials (4) mit thermoplastischem Kunststoff (2) in einem Formwerkzeug, wobei vor oder während des Einspritzens des thermoplastischen Kunststoffes (2) in das bereits das Dekormaterial (4) enthaltende Formwerkzeug dem schmelzflüssigen thermoplastischen Kunststoff (2) ein Gas in überkritischem Zustand beigemischt wird. Weiters wird ein Formteil (1) bestehend aus mit thermoplastischem Kunststoff (2) hinterspritztem oberflächenstrukturiertem Dekormaterial (4), insbesondere Echt- oder Kunstleder, beschrieben, wobei der thermoplastische Kunststoff (2) kompakte Randschichten und einen Kernbereich mit Bläschen mit einem Durchmesser von 10 bis 100 µm aufweist.

## Beschreibung

Die vorliegende Erfindung betrifft ein Verfahren zur Herstellung von Formteilen mit von oberflächenstrukturiertem Dekormaterial, insbesondere Echt- oder Kunstleder, bedeckter Oberfläche durch Hinterspritzen mittels physikalischen Schäumverfahren, nachfolgend "Hinterschäumen" genannt des Dekormaterials mit thermoplastischem Kunststoff in einem Formwerkzeug.

Allgemein werden spritzgegossene Kunststoffteile heutzutage in einer Vielzahl von Anwendungen verwendet, darunter auch im Fahrzeugbau. Zur Verbesserung des Aussehens ist es auch bekannt, die spritzgegossenen Kunststoffteile an ihrer Oberfläche mit Dekormaterial zu belegen. Als Dekormaterialien kommen dabei insbesondere Textilien sowie Kunst- oder Echtleder in Betracht. Das Belegen der Kunststoffteile kann dabei prinzipiell auf zwei Arten erfolgen, nämlich durch relativ aufwändiges Kaschieren der fertigen Kunststoffteile, was jedoch insbesondere bei kompliziert geformten Kunststoffteilen problematisch ist, oder durch Hinterschäumen des Dekormaterials mit thermoplastischem Kunststoff in einem Formwerkzeug. Beim Hintersschäumen wird das Dekormaterial zuerst in das noch leere Formwerkzeug eingelegt und dann wird in einem Arbeitsschritt ein thermoplastischer Kunststoff hinter das Dekormaterial gespritzt ("hinterschäumt"), wodurch beim Öffnen des Formwerkzeugs der bereits fertig belegte Kunststoffteil erhalten wird.

So beschreibt die DE 41 22 412 A1 ein Verfahren zur Herstellung von Formteilen mit von Dekormaterial bedeckter Oberfläche durch Hinterspritzen des Dekormaterials mit thermoplastischem Kunststoff in einem Formwerkzeug, bei dem das Dekormaterial mit rinnenförmig gebogenen Außenrändern in das Formwerkzeug eingelegt wird. Das Verfahren ermöglicht die Herstellung von dekorbedeckten Formteilen mit Umbug, d.h. vollständig bedeckten Außenkanten.

Die DE 41 27 241 A1 betrifft ebenfalls ein Verfahren zur Herstellung von Formteilen mit von Dekormaterial bedeckter Oberfläche durch Hinterspritzen des Dekormaterials mit thermoplastischem Kunststoff in einem Formwerkzeug, wobei das in die Form eingelegte Dekormaterial durch die Bewegung eines Teils des Formwerkzeugs an den Außenrändern rinnenförmig gebogen wird, wodurch ebenfalls die Herstellung von dekorbedeckten Formteilen mit Umbug, d.h. vollständig bedeckten Außenkanten, ermöglicht wird.

Gemäß der DE 42 28 282 wird das Dekormaterial eines hinterspritzen Formteils zumindest teilweise auf mehr als das 1,1-fache seiner ursprünglichen Länge und/oder Breite verstreckt, wozu das Dekormaterial vor dem Hinterspritzen selektiv an den Stellen mit starker Raumkrümmung erwärmt wird.

In allen drei Schriften werden als mögliches Dekormaterial auch oberflächenstrukturierte Dekormaterialien, insbesondere Echt- oder Kunstleder (beispielsweise PVC-Häute) erwähnt. Problematisch und nachteilig ist dabei jedoch, dass aufgrund der notwendigen hohen Innendrücke in Kombination mit relativ hohen Temperaturen beim Hinterspritzen des Dekormaterials etwaige Oberflächenstrukturen des Dekormaterials verloren gehen bzw. sich das Dekormaterial durch die Verstreckung unregelmäßig verziehen kann, wodurch, etwa wenn im Dekormaterial gleichmäßige geometrische Strukturen enthalten sind, das optische Erscheinungsbild der belegten Kunststoffteile gestört wird.

Die EP 1 621 312 A2 offenbart Spritzgussverfahren, welche das Beimischen von Gas zu einem schmelzflüssigen, thermoplastischen Kunststoff, vor Einspritzen des Kunststoffes in ein Formwerkzeug umfassen, wobei das Formwerkzeug auch eine Außenschicht aus Leder beinhalten kann. Es handelt sich dabei um ein "Injection Compression" Verfahren, in welchem das Formwerkzeug während des Einspritzens bzw. nach dem Einspritzen hinsichtlich seines Volumens erweitert wird.

Die EP 0 876 891 A1 offenbart Spritzgussformteile, bei denen ein Kunstleder hinterspritzt wird. Dem thermoplastischen Kunststoff wird das Gas erst nach Einbringen beigemischt.

Die EP 1 243 397 A2 betrifft ebenfalls ein Verfahren, in welchem ein Formteil durch Spritzguss hergestellt wird, wobei das Volumen der Gussform während des Spritzgießens vergrößert wird.

In der EP 0 446 941 A2 wird wiederum nur Kunstleder als Dekormaterial benannt, auch hier erfolgt die Expansion in der Form. Die Form ist dabei ebenfalls hinsichtlich ihres Volumens veränderlich.

Die EP 1 336 462 A2 schließlich beschreibt Formteile, welche geschäumt werden; auch hier wird ein Öffnen der Werkzeughälften um einen vorbestimmten Betrag geoffenbart.

Aufgabe der vorliegenden Erfindung ist es, ein Verfahren zur Herstellung von Formteilen mit von oberflächenstrukturiertem Dekormaterial, insbesondere Echt- oder Kunstleder, bedeckter Oberfläche durch Hinterspritzen mittels physikalischen Schäumverfahren des Dekormaterials mit thermoplastischem Kunststoff in einem Formwerkzeug vorzusehen, bei welchem das fertige Produkt im Wesentlichen dieselbe Oberflächenstruktur besitzt wie das ursprüngliche oberflächenstrukturierte Dekormaterial.

Diese Aufgabe wird erfindungsgemäß dadurch gelöst, dass vor oder während des Einspritzens des thermoplastischen Kunststoffes in das bereits das Dekormaterial enthaltende Formwerkzeug dem schmelzflüssigen thermoplastischen Kunststoff ein Gas in überkritischem Zustand beigemischt wird. Durch das Beimischen (Injizieren) von Gas im überkritischen Zustand in den schmelzflüssigen thermoplastischen Kunststoff vor dem Spritzgießen sind höhere Aufschäumgrade möglich als bei herkömmlicher Beimengung des Gases, beispielsweise nur unter erhöhtem Druck. So entstehen beim Druckabfall im Formwerkzeug im Kunststoff mikroskopisch kleine Bläschen, wodurch der Kunststoff von selbst aufschäumt. Dadurch braucht man bei der Produktion weniger Druck (d.h. einen niedrigeren Innendruck im Formwerkzeug im Vergleich zu herkömmlichem Spritzgießen) und Wärmeenergie, wodurch das fertige Produkt weniger beansprucht wurde und daher praktisch dieselbe Oberflächenstruktur besitzt wie das ursprüngliche oberflächenstrukturierte Dekormaterial. Insbesondere beim Hinterschäumen von stark oberflächenstrukturiertem Dekormaterial, wie Echt- oder Kunstleder, hat sich gezeigt, dass die fertigen Formteile eine praktisch unveränderte Oberflächenstruktur (Narbung) aufweisen wie das eingesetzte Leder. Es sei an dieser Stelle erwähnt, dass das Spritzgießen von mikrozelligem Material, also das Beimischen (Injizieren) von Gas in den schmelzflüssigen thermoplastischen Kunststoff vor dem Spritzgießen, an sich bekannt ist, etwa aus der EP 0 952 908 B1, der WO 99/32544, der WO 02/26485 oder der WO 02/26482, deren Offenbarungen hiermit ausdrücklich mit aufgenommen werden. Auch wird festgehalten, dass unter dem Begriff "Echt- oder Kunstleder" ebenso Lederfaserwerkstoffe bzw. aus rezykliertem Echtleder oder Echtlederabfällen hergestellte Werkstoffe zu verstehen sind.

Gemäß einer bevorzugten Ausführungsform der vorliegenden Erfindung wird der thermoplastische Kunststoff ausgewählt aus der Gruppe umfassend Acrylnitril/Butadien/Styrol (ABS), Polybutylenterephthalat (PBT, PBTP), Polycarbonat (PC), Polypropylen (PP), Polyoxymethylen/Polyacetal (POM), thermoplastisches Olefin-Polymer (TPO-ET) und Mischungen hievon, gegebenenfalls enthaltend Füll- und Verstärkungsmaterial, wie beispielsweise Glasfasern, Carbonfasern oder Kunststofffasern.

Vorzugsweise wird beim erfindungsgemäßen Verfahren dem schmelzflüssigen thermoplastischen Kunststoff Stickstoff oder Kohlendioxid als Gas beigemischt.

Besonders bevorzugt wird das Gas dem thermoplastischen Kunststoff während des Einspritzens in das bereits das Dekormaterial enthaltende Formwerkzeug beigemischt. Diese Verfahrensvariante, auch als "Optifoam-System" bzw. "Optifoam-Verfahren" bekannt und von der Fa. Sulzer (Schweiz) zur Serienreife gebracht, ist bei Spritzgießmaschinen nachrüstbar, wobei an der Maschine selbst keine Änderungen nötig sind, auch kann die Maschine weiterhin für konventionelles Spritzgießen verwendet werden. Weiters sind dem Schussgewicht (also der Menge der in einem Spritzvorgang in das Formwerkzeug einbringbaren Masse an schmelzflüssigem thermoplastischem Kunststoff) auch keine Untergrenzen gesetzt, die Obergrenze des Schussgewichts liegt je nach Ausführung bei etwa 1000 g.

Gemäß einer weiteren Ausführungsform des erfindungsgemäßen Verfahrens wird das Gas dem schmelzflüssigen thermoplastischen Kunststoff vor dem Einspritzen in das bereits das Dekormaterial enthaltende Formwerkzeug beigemischt. Bei dieser Verfahrensvariante, im Stand der Technik als "MuCell-Verfahren" z.B. der Fa. Trexel (USA), bekannt, wird das Gas bereits in der Plastifiziereinheit der Spritzgießmaschine dem schmelzflüssigen thermoplastischen Kunststoff beigemischt, wodurch eine eigene Plastifiziereinheit notwendig ist. Der Vorteil des MuCell-Verfahrens liegt jedoch darin, dass damit auch größere Formteile mit einem erforderlichen Schussgewicht weit über 1000 g herstellbar sind.

In einem weiteren Aspekt betrifft die vorliegende Erfindung einen Formteil bestehend aus mit thermoplastischem Kunststoff hinterspritzten oberflächenstrukturierten Dekormaterial, insbesondere Echt- oder Kunstleder, wobei der thermoplastische Kunststoff kompakte Randschichten und einen Kernbereich mit Bläschen mit einem Durchmesser von 10 bis 100 µm, vorzugsweise 10 bis 50 µm, aufweist. Derartige Formteile weisen verbesserte Eigenschaften auf als kompakte Formteile, beispielsweise ermöglichen die kompakten Randschichten und der Kern mit mikroskopisch kleinen Bläschen eine verbesserte Biegeeigenschaft. Herstellbar sind derartige Formteile beispielsweise durch die beiden erfindungsgemäßen Verfahren, sie können aber auch durch chemisches Schäumen (Verwendung eines Polymers mit Treibmittel), hergestellt werden. Ein besonderer Vorteil der neuen Formteile liegt darin, dass mit diesem erstmals ein mit oberflächenstrukturiertem Dekormaterial beschichteter Formteil zur Verfügung gestellt wird, welcher einen emissionsfreien Verbund des Dekormaterials mit dem Kunststoffteil darstellt, mit der Möglichkeit der faltenfreien Ausführung von Sicken, Ecken bzw. Radien.

In den Zeichnungen zeigen:

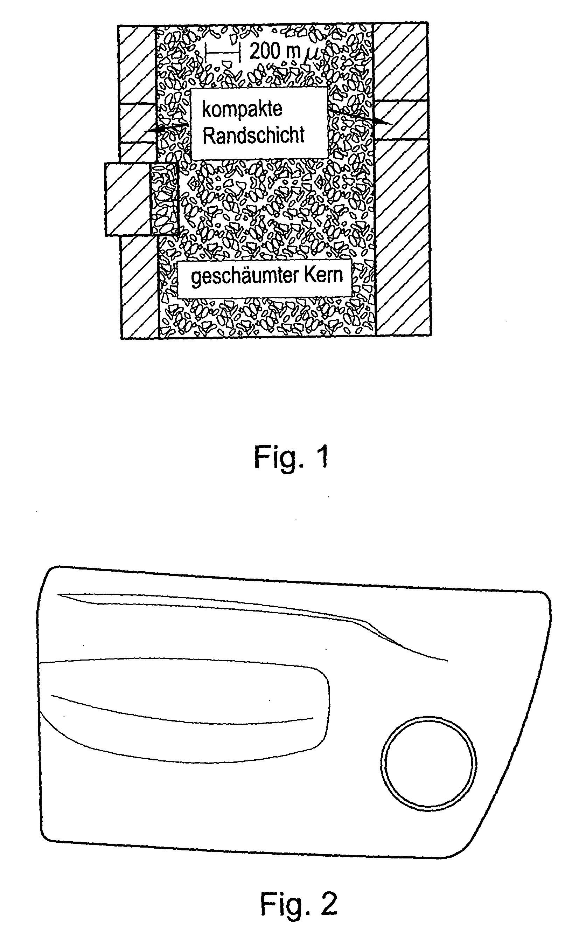

Fig. 1 einen Querschnitt durch einen mittels des Optifoam-Verfahrens hergestellten Formteil ohne Dekormaterial,
Fig. 2 eine KFZ-Türseitenverkleidung, hergestellt nach dem erfindungsgemäßen Verfahren unter Verwendung der MuCell-Technologie, aus einem einzigen Lederzuschnitt ohne Nähte,
Fig. 3 einen schematischen Querschnitt durch einen erfindungsgemäßen beschichteten Formteil, und
Fig. 4 einen teilweise erfindungsgemäß beschichteten Formteil.

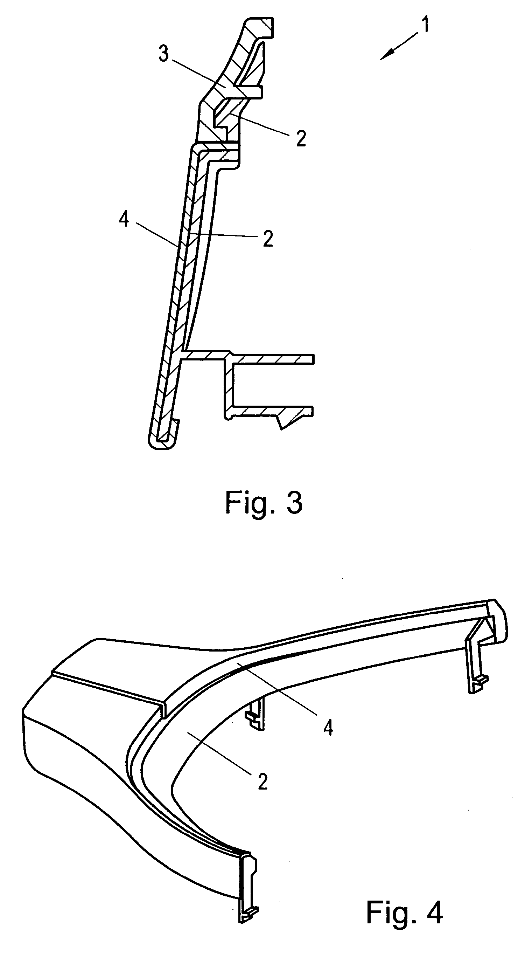

Gemäß Fig. 3 und 4 besteht der erfindungsgemäße Formteil 1 aus mit aufgeschäumtem thermoplastischem Kunststoff 2 hinterspritzten oberflächenstrukturierten Dekormaterial 4, insbesondere Echt- oder Kunstleder, wobei der erfindungsgemäße Formteil 1 weiters eine Verblendung 3 aufweist.

Die vorliegende Erfindung wird nun unter Bezugnahme auf die nachstehenden Beispiele näher erläutert.

Für die nachstehend beschriebenen Versuche wurde sowohl eine mit Optifoamtechnologie (d.h. Beimischen eines überkritischen Gases zu dem schmelzflüssigen thermoplastischen Kunststoff während des Einspritzens in das bereits das Dekormaterial enthaltende Formwerkzeug) als auch alternativ eine mit MuCell-Technologie (d.h. Beimischen eines überkritischen Gases zu dem schmelzflüssigen thermoplastischen Kunststoff vor dem Einspritzen) ausgerüstete Spritzgussmaschine verwendet. Die Formteile bestanden aus Echtleder oder Kunstleder, hinterschäumt mit Hostacom G2, einem Polypropylen der Fa. Basell Polyolefins (USA). Das Formwerkzeug bei Verwendung der Optifoamtechnologie war mit einem Heißkanal und 4 Nadelverschlussdüsen (2 je Kavität) sowie Luftanschlüssen für die Steuerung der Textilbefestigung ausgestattet. Für die Versuche wurde aufgrund der besseren Löslichkeit im thermoplastischen Kunststoff CO₂ als Gas verwendet. Es wurde als Dekormaterial Kunst- und Echtlederteile in das Formwerkzeug eingelegt und sowohl beim Hinterspritzen der Lederteile in herkömmlichen Kompaktspritzgussverfahren als auch beim Hinterspritzen der Lederteile mit dem erfindungsgemäßen Verfahren Forminnendruckkurven aufgezeichnet.

Beim ersten Versuch mittels eines herkömmlichen Kompaktspritzgussverfahrens unter Verwendung von Hostacom G2 ohne Beimischung eines Gases wurden Echtlederteile bei einer Temperatur des schmelzflüssigen thermoplastischen Kunststoffes von 250 °C und Forminnendrücken von 270 - 300 bar hinterspritzt.

Die Forminnendruckkurve war wie in Bild 1 dargestellt.

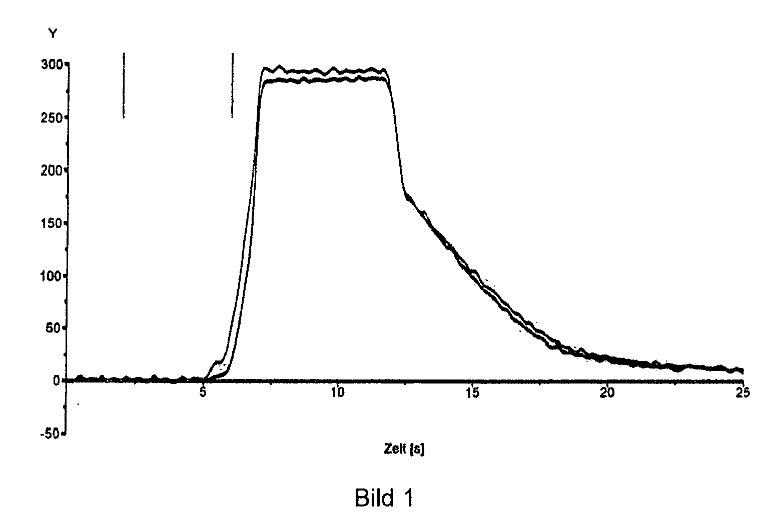

Das Lederdekor der fertigen Formteile zeigte jedoch einen deutlichen Verlust der Lederoberflächenstruktur verteilt über die ganze Oberfläche. Bei einer Wiederholung des Versuchs mit Kunstleder als Dekormaterial war der Strukturverlust nicht ganz so schlimm, aber immer noch deutlich merkbar.

Bei einer Wiederholung der Versuche unter Einsatz des erfindungsgemäßen Verfahrens (unter Verwendung der Optifoam- und MuCell-Technologie) zeigte sich, dass aufgrund des verbesserten Fließverhaltens des schmelzflüssigen thermoplastischen Kunststoffes wegen des beigemischten Gases eine Verarbeitung des Materials bei einer verringerten Temperatur von 230 °C und Innendrücken im Formwerkzeug von 10 bis 100 bar möglich war. Das Kunstlederdekor der fertigen Formteile blieb erhalten. Eine Wiederholung des Versuches unter Einsatz des erfindungsgemäßen Verfahrens bei Verwendung von Echtleder als Dekormaterial zeigte ähnliche Ergebnisse, auch hier war die Lederstruktur am fertigen Formteil erhalten geblieben, bei einer Freistellung der Kontur blieb die Struktur selbst in kritischen Radienbereichen erhalten.

Die Forminnendruckkurve beim Versuch mit Kunstleder war wie in Bild 2 dargestellt.

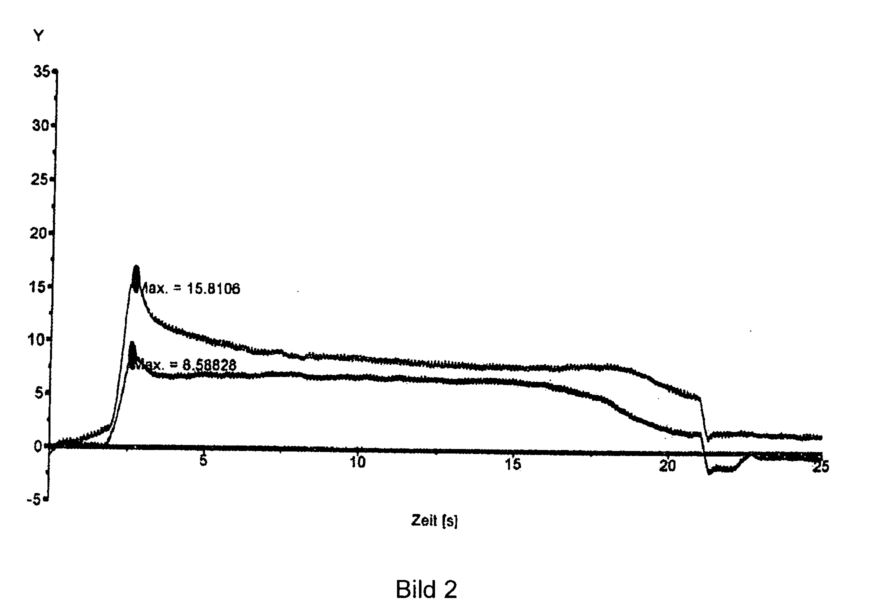

Die Forminnendruckkurve beim Versuch mit Echtleder war wie in Bild 3 dargestellt.

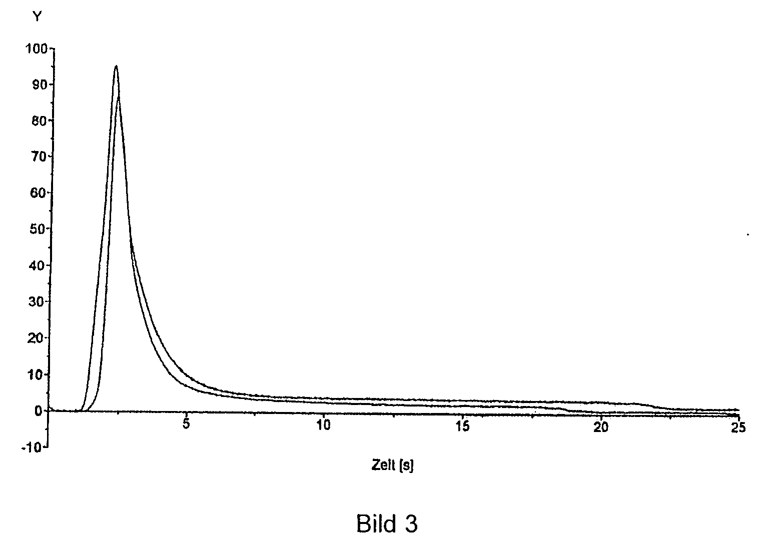

## Patentansprüche

1. Verfahren zur Herstellung von Formteilen mit von oberflächenstrukturiertem Dekormaterial, insbesondere Echt- oder Kunstleder, bedeckter Oberfläche durch Hinterspritzen des Dekormaterials mit thermoplastischem Kunststoff in einem Formwerkzeug, **dadurch gekennzeichnet, dass** vor oder während des Einspritzens des thermoplastischen Kunststoffes in das bereits das Dekormaterial enthaltende Formwerkzeug dem schmelzflüssigen thermoplastischen Kunststoff ein Gas in überkritischem Zustand beigemischt wird.

2. Verfahren nach Anspruch 1, **dadurch gekennzeichnet, dass** der thermoplastische Kunststoff ausgewählt wird aus der Gruppe umfassend Acrylnitril/Butadien/Styrol (ABS), Polybutylenterephthalat (PBT, PBTP), Polycarbonat (PC), Polypropylen (PP), Polyoxymethylen/Polyacetal (POM), thermoplastisches Olefin-Polymer (TPO-ET) und Mischungen hievon, gegebenenfalls enthaltend Füll- und Verstärkungsmaterial, wie beispielsweise Glasfasern, Carbonfasern oder Kunststofffasern.

3. Verfahren nach Anspruch 1 oder 2, **dadurch gekennzeichnet, dass** dem schmelzflüssigen thermoplastischen Kunststoff Stickstoff oder Kohlendioxid als Gas beigemischt wird.

4. Verfahren nach einem der Ansprüche 1 bis 3, **dadurch gekennzeichnet, dass** das Gas dem thermoplastischen Kunststoff während des Einspritzens in das bereits das Dekormaterial enthaltende Formwerkzeug beigemischt wird.

5. Verfahren nach einem der Ansprüche 1 bis 3, **dadurch gekennzeichnet, dass** das Gas dem thermoplastischen Kunststoff vor dem Einspritzen in das bereits das Dekormaterial enthaltende Formwerkzeug beigemischt wird.

6. Formteil bestehend aus mit thermoplastischem Kunststoff hinterspritztem oberflächenstrukturiertem Dekormaterial, insbesondere Echt- oder Kunstleder, **dadurch gekennzeichnet, dass** der thermoplastische Kunststoff kompakte Randschichten und einen Kernbereich mit Bläschen mit einem Durchmesser von 10 bis 100 µm aufweist.

7. Formteil nach Anspruch 6, **dadurch gekennzeichnet, dass** der thermoplastische Kunststoff einen Kernbereich mit Bläschen mit einem Durchmesser von 10 bis 50 µm aufweist.
